# EUROPÄISCHE PATENTSCHRIFT

(11) **EP 1 901 639 B1**
(45) Veröffentlichungstag und Bekanntmachung des Hinweises auf die Patenterteilung: **18.08.2010**
(21) Anmeldenummer: 07728780.3
(22) Anmeldetag: 04.05.2007
(51) Int. Cl.: A47J 31/60

(54) **VERFAHREN ZUR DURCHFÜHRUNG VON SERVICEVORGÄNGEN IN EINER HEISSGETRÄNKEZUBEREITUNGSVORRICHTUNG**
METHOD OF IMPLEMENTING SERVICING OPERATIONS IN A HOT-BEVERAGE MAKER
PROCÉDÉ POUR RÉALISER DES OPÉRATIONS DE SERVICE DANS UN DISTRIBUTEUR DE BOISSONS CHAUDES

(30) Priorität: 18.05.2006 DE 102006023449
(43) Veröffentlichungstag der Anmeldung: 26.03.2008
(73) Patentinhaber: BSH Bosch und Siemens Hausgeräte GmbH, 81739 München (DE)
(72) Erfinder: CRUMP, Nicole, 83278 Traunstein (DE); KRAMER, Siegmund, 83417 Kirchanschöring (DE); OSTERMAIER, Albert, 83371 Stein A.d. Traun (DE)
(86) Internationale Anmeldenummer: PCT/EP2007/054327
(87) Internationale Veröffentlichungsnummer: WO 2007/134956

(56) Entgegenhaltungen:
- WO-A-2006/090183
- DE-C1- 19 901 011
- US-A- 4 305 328
- US-A1- 2005 098 575

## Beschreibung

Die Erfindung betrifft ein Verfahren zur Durchführung von Wartungs- bzw. Servicevorgängen in einer Vorrichtung zur Bereitung von Heißgetränken, insbesondere in einem Kaffeevollautomaten, wobei die Vorrichtung einen Wassertank, eine Heizkammer zum Aufheizen von Wasser und mindestens eine Brühkammer zum Bereiten von mindestens einer Heißgetränkeart durch Zugabe mindestens einer Heißgetränkezutat und einen Heißgetränkeauslass umfasst und wobei im Betrieb der Vorrichtung ein erstes Serviceerfordernis, beispielsweise ein erstes Erfordernis zum Reinigen, und ein zweites Serviceerfordernis, beispielsweise ein Erfordernis zum Entkalken oder ein zweites Erfordernis zum Reinigen, auftreten. Die Erfindung betrifft außerdem eine Vorrichtung zur Durchführung des Verfahrens.

Der Begriff Serviceerfordernis steht für die Notwendigkeit der Ausführung verschiedener, die Zubereitung von Heißgetränken nicht betreffender Wartungs- und Servicevorgänge, beispielsweise ein Entkalkungserfordernis sowie verschiedene Reinigungs- und/oder Spülerfordernisse.

Bei der Bereitung von Heißgetränken in derartigen Vorrichtungen wird eine vorbestimmte Menge einer Heißgetränkezutat mit einer vorbestimmten Menge aufgeheizter Flüssigkeit, beispielsweise Wasser, in einer Brühkammer zusammengeführt und vermischt. Ein Heißgetränk kann Kaffee, Tee, Suppe oder Kakao sein; entsprechend kann eine Heißgetränkezutat Kaffeepulver, geeignet zerkleinerte Teeblätter, ein Suppenpulver oder ein Instant-Kakaogetränkepulver sein und die Flüssigkeit Milch oder Wasser. Das Vermischen kann ein Auflösen zumindest von Bestandteilen der Heißgetränkezutat, wie Zucker- oder Kochsalzkristallen, ein Suspendieren von Bestandteilen der Heißgetränkezutat, wie pflanzlichen oder tierischen Fette oder Ölen, in der Flüssigkeit, ein Aufsaugen der Flüssigkeit in Bestandteilen der Heißgetränkezutat, wie getrockneten und geeignet zerkleinerten, pflanzlichen oder tierischen Lebensmittelprodukten, und durch Aufsaugen bedingtes Aufquellen der Bestandteile der Zutat umfassen, und ein Herauslösen von Wirkstoffen, wie Aroma-, Farb- und Wirkstoffen, aus Bestandteilen, wie Körnern, der Heißgetränkezutat.

Ohne Beschränkung wird im Folgenden die Zubereitung von Kaffee als Beispiel für die Heißgetränkebereitung betrachtet.

Beim Erhitzen von Wasser fallen die in ihm enthaltenen Mineralstoffe einschließlich Kalk bei Temperaturen über etwa 60°C aus. Sie lagern sich auf den mit dem heißen Wasser in Berührung kommenden Oberflächen ab. Für diese Ausfällungen und Ablagerungen von Mineralstoffen wird im Folgenden vereinfachend der Ausdruck Verkalkung verwendet. Ohne Gegenmaßnahme nimmt die Verkalkung mit fortschreitendem Wasserdurchfluss stetig zu, insbesondere auf den Innenoberflächen der Leitungen, der Heiz- und der Brühkammer. Die Verkalkung verursacht eine zunehmende Verengung der Leitungsquerschnitte, ein Verstopfen oder gar vollständiges Verschließen kleiner Durchlassöffnungen, wie beispielsweise in Filtern, Sieben und Ventilen. Sie verringert außerdem die effektive Heizleistung in der Heizeinrichtung durch eine zunehmende Vergrößerung des Wärmewiderstands zwischen den Heizelementen und dem aufzuheizenden Wasser. Daher muss die Verkalkung nach einer gewissen Betriebsdauer bzw. Durchflussmenge von Frischwasser entfernt werden.

Zur schonenden Entfernung der Verkalkung werden die mit heißem Wasser in Berührung kommenden Leitungen und Komponenten mit einem Verkalkung chemisch lösenden Aktivstoff, im Folgenden Entkalkungsmittel bzw. Entkalker genannt, beschickt. Der Entkalker wirkt während einer zum Auflösen der Ablagerungen geeignet gewählten Einwirkzeit ein und wird dann mit einem Spülfluid, in der Regel Wasser, ausgespült.

Ein weiteres bei der Heißgetränkebereitung auftretendes Problem sind Ablagerungen von fettigen bzw. öligen Bestandteilen aus der Heißgetränkezutat auf den Komponenten bzw. innenseitigen Oberflächen der Vorrichtung, insbesondere den Innenflächen der Brühkammer und den aus dieser hinausführenden Leitungen, Filtern und Ventilen. Im Folgenden werden die Ablagerungen fettiger bzw. öliger Bestandteile mit dem Ausdruck Verklebung bezeichnet.

Für die Zwecke der folgenden Darstellung der Erfindung bezeichnet:
- "Reinigen" bzw. "Reinigung" das Entfernen fettiger oder öliger Bestandteile, "Entkalken" das Entfernen von Verkalkungen;
- Reinigungs- und "Entkalkungszyklus" einen in seinem Ablauf gesteuerten Vorgang zum Reinigen bzw. Entkalken;
- "Spülen" das Ausspülen von Rückständen eines Entkalkungs- oder Reinigungsmittels;
- "Spülzyklus" einen in seinem Ablauf gesteuerten Vorgang des Spülens;
- "Reinigungsvorgang" bzw. "Entkalkungsvorgang" bezüglich ihres Ablaufs gesteuerte Folgen aus mindestens einem Reinigungszyklus bzw. einem Entkalkungszyklus und mindestens einem anschließenden Spülzyklus;
- "Servicevorgang" einen Oberbegriff für einen Entkalkungs- bzw. Reinigungsvorgang.

Im Gegensatz zu den vorgenannten Begriffserklärungen wird in der Literatur der Begriff "Reinigen" als Oberbegriff für "Entkalken und Spülen" oder für "Entkalken und Reinigen" verwendet. Diese Bedeutungen des Begriffs Reinigen sind im Folgenden nicht gemeint.

Die US 2005/0098575 A1 offenbart eine Abgabevorrichtung für ein Lebensmittelprodukt, bei dem wahlweise ein erster oder ein zweiter, vom ersten verschiedener Reinigungszyklus ausgeführt werden kann, wobei der zweite Reinigungszyklus auch einen Desinfektionsschritt enthalten kann. Der erste Reinigungszyklus kann mit einem ersten Intervall wiederholt werden, bevor der zweite Reinigungszyklus mit einem zweiten Intervall wiederholt wird. Beim Betrieb der Abgabevorrichtung wird zwischen Abgabevorgängen des Lebensmittelprodukts und dem ersten und/oder zweiten Reinigungszyklus umgeschaltet. Eine Kontrollvorrichtung bestimmt automatisch, wann ein Reinigungszyklus durchgeführt wird. Nachteilig ist bei dieser Abgabevorrichtung, dass kein Entkalkungszyklus vorgesehen ist und dass bei den verschiedenen Reinigungszyklen ein Verwechslungsrisiko bezüglich des auszuführenden Reinigungszyklus und des dafür zuzugebenden Reinigungsmittels besteht, was bei der Bedienung besondere Aufmerksamkeit erfordert. Für jeden Reinigungszyklus ist jeweils eine zugehörige Ablaufsteuerung zu implementieren, mithin sind also mehrere verschiedene Ablaufsteuerungen erforderlich.

Die WO 2006/090183 A1 offenbart einen Getränkeautomaten, der sowohl in einem Betriebszustand wie auch in einem Reinigungszustand arbeiten kann.

Die US 2005/098575 A1 offenbart eine Abgabevorrichtung für ein Lebensmittelprodukt, mit einem Lebensmittelproduktabgabemechanismus, einem Reinigungsmechanismus und einer Steuereinrichtung, die ausgehend von bestimmten Bedingungen den Reinigungsmechanismus steuert.

Aufgabe der Erfindung ist es, die Ausführung, Bedienung und Ablaufsteuerung von Servicevorgängen, insbesondere die Anzahl und die Verschiedenheit der erforderlichen Servicevorgänge zu vereinfachen sowie die dafür erforderliche Zeit zu verringern.

Zur Lösung der Aufgabe umfasst das Verfahren der eingangs genannten Art die Ausführung eines Kombinationsservicevorgangs, in dem Vorgänge zum Erfüllen des ersten Serviceerfordernisses und Vorgänge zum Erfüllen des zweiten Serviceerfordernisses zumindest teilweise zusammengefasst sind, so dass nur ein gemeinsamer Spülzyklus (132) erforderlich ist. Dadurch wird eine Vereinfachung der Verfahrens- bzw. Ablaufsteuerung erreicht. Statt eines ersten und eines zweiten Servicevorgangs genügt zum Erfüllen des ersten und des zweiten Serviceerfordernisses also ein einziger Kombinationsservicevorgang. Die Zusammenfassung von mindestens zwei verschiedenen Servicevorgängen vereinfacht zum einen die Bedienung und spart bei der Durchführung der Servicevorgänge Zeit. Zum anderen verringert die Zusammenfassung den technischen Aufwand, weil sie die entsprechenden Ablaufsteuerungen vereinfacht.

Der Kombinationsservicevorgang fasst die Vorgänge eines ersten und eines zweiten Serviceerfordernisses zumindest teilweise stofflich und/oder zeitlich zusammen. Stoffliches Zusammenfassen heißt, dass Entkalker und Reinigungsmittel oder ein erstes und ein zweites vom ersten verschiedenes Reinigungsmittel zu einem Mischmittel zusammengefasst werden. Es muss also nur noch ein Mittel zugegeben werden, das beide Funktionen erfüllt. Dadurch vereinfacht sich die Bedienung der Heißgetränkevorrichtung. Beim zeitlichen Zusammenfassen laufen die Servicevorgänge unmittelbar und zwingend gleichzeitig oder hintereinander ab. Gleichzeitig ablaufen können beispielsweise ein Spülzyklus zum Ausspülen eines Entkalkers und ein Spülzyklus zum Ausspülen eines Reinigungsmittels oder ein Entkalkungszyklus gleichzeitig mit einem Reinigungszyklus.

Darüber hinaus können beispielsweise die Servicevorgänge im Kombinationsservicevorgang durch Zugabe eines Mischmittels stofflich zusammengefasst und das Ausspülen zu einem einzigen Spülzyklus zeitlich zusammengefasst sein, müssen also nicht mehr getrennt voneinander ausgeführt werden. Für eine einwandfreie Funktion der Heißgetränkebereitungsvorrichtung ist auf diese Weise sichergestellt, dass die erforderlichen Servicevorgänge wie Reinigen und Entkalken immer ausgeführt werden und nicht vergessen oder aus Bequemlichkeit unterlassen werden.

In einem Kombinationsservicevorgang können selbstverständlich auch mehr als nur zwei Serviceerfordernisse zusammengefasst sein.

Der Kombinationsservicevorgang kann zumindest halbautomatisch gesteuert ablaufen. Halbautomatisch bedeutet, dass ein Bediener bei bestimmten Vorgängen während entsprechender Wartezyklen noch eingreift, beispielsweise beim Beschicken mit Aktivstoffen wie Entkalker oder Reinigungsmittel.

Vorzugsweise läuft der Kombinationsservicevorgang vollautomatisch ab: Entnehmen von Frischwasser aus dem Leitungsnetz und Beschicken mit Aktivstoffen. So erübrigt sich der Eingriff eines Bedieners, und die Gefahr von Fehlbedienungen wird vermindert. Also kann die Bedienung vereinfacht und zeitsparend durchgeführt werden.

Das erste Serviceerfordernis kann ein auf eine erste Gruppe gerichtetes Reinigen umfassen. Das zweite Serviceerfordernis kann ein Entkalken oder ein auf eine zweite Gruppe gerichtetes Reinigen umfassen. Der Begriff "Gruppe" umfasst die verschiedenen in einer Heißgetränkezutat enthaltenen Stoffgruppen wie Eiweiß, Kohlehydrate, Öle und Fette, die mit verschiedenen, dafür jeweils besonders geeigneten Reinigungsmitteln zu entfernen sind. Zwei verschiedene Reinigungserfordernisse können bei der Bereitung eines Kakaogetränks auftreten, wenn die Heißgetränkezutat ein Kakaogetränkmischpulver aus Milchpulver, Kakaopulver, Zuckerkristallen und pulverisierten Aromastoffen ist. Das erste Reinigungserfordernis kann sich auf das Entfernen der von Milcheiweiß herrührenden Verklebungen richten, z.B. mittels eines Enzyms. Das zweite Reinigungserfordernis kann sich auf das Entfernen der ätherischen Öle aus dem Kakaopulver mittels eines speziellen Aktivstoffs richten.

Die Vorgänge zum Erfüllen eines Reinigungserfordernisses können einen Reinigungsvorgang, beispielsweise das Beschicken mit einem ersten und/oder einem vom ersten verschiedenen zweiten Reinigungsmittel umfassen. Nach dem Beschicken mit dem Reinigungsmittel kann der Reinigungsvorgang das Ausspülen des Reinigungsmittels mit einem Spülfluid, wie Wasser, umfassen. Nach dem Beschicken und vor dem Ausspülen kann der Reinigungsvorgang einen Schritt des Einwirkens des Reinigungsmittels umfassen. Vorzugsweise wird eine Kammer zur Heißgetränkebereitung mit einem entsprechenden Reinigungsmittel beschickt, wodurch das Reinigungsmittel in den Bereichen der stärksten Verunreinigung effizient und gründlich einwirken kann.

Die Vorgänge zum Erfüllen eines Entkalkungserfordernisses können einen Entkalkungszyklus umfassen, der das Beschicken mit einem Entkalkungsmittel umfassen kann. Vorzugsweise wird mindestens die Heizkammer mit dem Entkalkungsmittel beschickt, wodurch das Entkalkungsmittel im Bereich der stärksten Verkalkung effizient und gründlich einwirken kann.

Ein Entkalkungsvorgang kann nach dem Beschicken mit dem Entkalkungsmittel das Ausspülen des Entkalkungsmittels mit einem Spülfluid, insbesondere mit Wasser, umfassen. Dadurch werden die mit dem Entkalkungsmittel in Berührung kommenden Oberflächenteile der Vorrichtung von dem Entkalkungsmittel befreit und für die anschließende Heißgetränkbereitung sauber gespült. Nach dem Beschicken und vor dem Ausspülen kann ein Schritt des Einwirkens des Entkalkungsmittels in der Heizkammer vorgesehen sein, um eine effizientere bzw. gründlichere Wirkung des Entkalkungsmittels zu ermöglichen.

Das Entkalkungsmittel kann in flüssiger Form eingefüllt werden oder in fester Form, beispielsweise in gepresster Tablettenform, zugegeben und aufgelöst werden. Vorzugsweise wird das Entkalkungsmittel in den Wassertank zugegeben und anschließend auf dem üblichen Weg des Wassers durch die Vorrichtung verteilt, so dass das Entkalkungsmittel auf alle beim Betrieb mit Wasser, insbesondere Heißwasser, in Berührung kommenden Teile einwirken kann.

Ein Reinigungsvorgang kann das Beschicken mit einem Reinigungsmittel - beispielsweise einem chemisch oder biologisch aktiven (Verunreinigungen lösenden) Stoff - umfassen. Auch das Reinigungsmittel kann in flüssiger oder in fester Form, beispielsweise in gepresster Tablettenform, zugegeben werden. Vorzugsweise wird das Reinigungsmittel direkt in die Brühkammer gegeben, wo die stärksten Verunreinigungen erwartet werden, so dass eine effiziente und gründliche Wirkung des Reinigungsmittels möglich ist.

Ein Beschicken mit einem Entkalkungsmittel und ein Beschicken eines Wassertanks mit einem Reinigungsmittel können in einem gemeinsamen Beschickungszyklus, also zeitlich zusammengefasst sein. Dabei kann das Entkalkungsmittel direkt in den Wassertank oder in die Heizkammer und das Reinigungsmittel direkt in die entsprechende Brühkammer gegeben werden. Bei einer halbautomatischen Ablaufsteuerung kann das Beschicken mit Entkalkungsmittel und mit Reinigungsmittel oder das Beschicken mit einem ersten Reinigungsmittel und mit einem zweiten Reinigungsmittel während eines (einzigen) Wartezyklus zusammengefasst sein. Bei vollautomatischer Ablaufsteuerung können das Beschicken mit einem Entkalkungsmittel und das Beschicken mit einem Reinigungsmittel oder das Beschicken eines ersten Bereichs mit einem ersten Reinigungsmittel und das Beschicken eines zweiten Bereichs mit einem zweiten Reinigungsmittel jeweils im Wesentlichen gleichzeitig ausgeführt werden. Dies ermöglicht, im Ablauf des Kombinationsservicevorgangs weiter Zeit einzusparen.

Ein Entkalkungszyklus und ein Reinigungszyklus oder ein erster Reinigungszyklus und ein zweiter Reinigungszyklus sind so zusammengefasst, dass nur ein Spülzyklus erforderlich ist. Dies bewirkt für die Servicevorgänge Einsparungen beim Wasserverbrauch.

Das Verfahren kann einen Schritt umfassen, in dem die Notwendigkeit zum Ausführen eines Servicevorgangs erfasst wird. Dabei wird der Verkalkungs- und/oder Verklebungsgrad relevanter Funktionsteile der Kaffeemaschine ermittelt, zum Beispiel die Verkalkung der Heizeinrichtung oder die Verklebung der Brühkammer. Dies ermöglicht eine rechtzeitige Ausführung des Servicevorgangs sowie einen reibungslosen Betriebsablauf, bevor es zu dessen Störung beispielsweise durch zu starke Verunreinigung oder zu starke Verkalkung kommt.

Erfasst werden kann also zum einen die Notwendigkeit zum Durchführen eines Entkalkungsvorgangs. Dazu kann eine über mehrere Heißgetränke-Abgabevorgänge gemessene Durchflußmenge von Wasser gemessen werden. Vorzugsweise wird die Durchflussmenge durch den Heiztank entlang des Förderwegs des Wassers zwischen dem Wassertank und der Heizkammer gemessen, wo die stärkste Verkalkung zu erwarten ist. Dazu kann entlang dieses Förderwegs ein Wasserdurchflussmesser angeordnet sein. Alternativ kann die Durchflussmenge bei Verwendung einer Messförderpumpe auch in der Pumpe gemessen werden, beispielsweise bei einer Kolbenpumpe mit bekannter Kolbenverdrängung durch Zählen der Kolbenhübe. Oder die Wasserhärte wird über den Ionengehalt des Wassers bestimmt. Jedenfalls wird der Entkalkungsvorgang einerseits nicht zu häufig und andererseits rechtzeitig vor dem Auftreten zu starker Verkalkung initiiert.

Ähnlich kann das Verfahren die Notwendigkeit eines Reinigungsvorgangs erfassen. Dazu kann die Anzahl von Heißgetränke-Abgabevorgängen gezählt und/oder eine Nutzungshäufigkeit der Vorrichtung erfasst werden. Dabei wird angenommen, dass jeder Abgabevorgang den Grad der Verunreinigungen in gleicher Weise vergrößert.

Besondere Vorteile werden erzielt, wenn der erste Servicevorgang ein Entkalkungszyklus und der zweite ein Reinigungszyklus ist. Dann ist es nicht mehr notwendig, für jeden Zyklus verschiedene Servicevorgänge vorzusehen, sondern es genügt ein einziger Kombinationsservicevorgang.

Die Notwendigkeit eines Serviceerfordernisses kann sensorgesteuert und automatisch erfasst werden.

Ferner ist eine Vorrichtung zur Bereitung von einer Art oder mehreren Arten von Heißgetränken, insbesondere von einem Kaffeevollautomaten, vorgesehen, bei der im Betrieb ein erstes Serviceerfordernis, beispielsweise ein erstes Reinigen, und ein zweites Serviceerfordernis auftreten, beispielsweise ein Entkalken oder ein zweites Reinigen.

Das Vorratsvolumen des Wassertanks ist dem Bedarf des Spülvorgangs angepasst. Bisher musste daher zwischen den Spülvorgängen Wasser nachgefüllt werden. Vorteilhafterweise kann das Vorratsvolumen so groß bemessen sein, dass zunächst eine Entkalkerlösung und anschließend noch die mit einem Reinigungsmittel beschickten Teile wirksam ausgespült werden, ohne dass Wasser in den Wassertank nachgefüllt werden muss.

Alternativ kann der Kaffeevollautomat über eine Wasseranschlussleitung mit einem steuerbaren Wasserzulaufventil an ein Leitungsnetz angeschlossen sein. Die Steuereinheit kann dann das Öffnen und Schließen des Wasserzulaufventils zum Zuführen von Frischwasser steuern. Damit kann das sonst von einem Bediener auszuführende Befüllen des Wassertanks mit Frischwasser entfallen bzw. automatisiert werden, so dass sich eine Bedienertätigkeit erübrigt.

In der Vorrichtung können Mittel zur Steuerung des Kombinationsservicevorgangs und der darin zusammengefassten Vorgänge bereitgestellt sein, beispielsweise eine elektromechanische Steuereinheit oder ein programmierbarer Prozessor (Mikroprozessor), der vorzugsweise einen programmierbaren oder neu beschreibbaren Programmspeicherbereich umfasst. Wenn die Steuereinheit ein programmierbarer Prozessor ist, wird anstelle der nach Stand der Technik erforderlichen verschiedenen Programme zur Steuerung des ersten und des zweiten Servicevorgangs nur ein Prozessorprogramm, in dem die Steuerung des Kombinationsservicevorgangs codiert ist, benötigt.

Kann die Heißgetränkevorrichtung mehrere Getränkesorten wie Kaffee, Tee, Kakao und Suppen herstellen, so umfasst sie mehrere Zutatenvorratsbehälter und je eine Brühkammer zur Bereitung jedes Getränks.

Das Beschicken mit Entkalker und Reinigungsmittel kann ebenfalls automatisch erfolgen. Dazu weist die Vorrichtung entsprechende Vorratsbehälter und steuerbare Zuführmittel auf, die durch die Steuereinheit aktiviert werden. So kann ein sonst durch einen Bediener auszuführendes Beschicken durch einen automatisch gesteuerten Schritt ersetzt werden. Damit entfällt jegliche Bedienertätigkeit zur Ausführung von Servicevorgängen. Der Kaffeevollautomat ist folglich jederzeit gut gepflegt und funktionsbereit.

Bisher ist in Kaffeevollautomaten die Brühkammer nur gegenüber Reinigungsmitteln beständig ausgebildet, nicht jedoch gegenüber Entkalkern. Dies hat zur Folge, dass die Brühkammer beim Entkalken abgesperrt werden muss. Außerdem muss ein gesonderter Auslass für die Entkalkerlösung vorgesehen sein. Dabei wird in Kauf genommen, dass die Leitung von der Brühkammer zum Heißgetränkeauslass nicht entkalkt werden kann. Um diese Nachteile zu überwinden und die Ablaufsteuerung des Kombinationsservicevorgangs weiter zu vereinfachen, kann die Brühkammer gegenüber einem Entkalkungsmittel beständig ausgebildet sein, zum Beispiel aus Edelstahl. Entkalkungs- und Reinigungsmittel können dann gleichzeitig oder unmittelbar aufeinander folgend zugegeben und der Entkalkungs- und der Reinigungsvorgang zeitsparend zusammengefasst werden. Unter Umständen kann außerdem ein Spülvorgang zwischen dem Entkalkungs- und dem Reinigungsvorgang entfallen, was weitere Zeit einspart.

In der Vorrichtung für automatischen Betrieb sind Mittel zum Erfassen der Notwendigkeit eines Servicevorgangs, die indikativ für einen erreichten Verunreinigungsgrad sind, und solche zum Erfassen einer Durchflussmenge von Wasser über mehrere Heißgetränke-Abgabevorgänge bereitgestellt. Die Durchflussmenge wird insbesondere in der Heizkammer gemessen, da dort die stärkste Verkalkung erwartet wird und das gesamte erhitzte Wasser dort hindurch gefördert wird. Zusätzlich oder alternativ können sie über den Ionen-Gehalt von Wasser dessen Wasserhärte bestimmen. Denn die Wasserhärte trägt neben der Aufheiztemperatur und der verarbeiteten Wassermenge maßgeblich zur Verkalkung bei. Dadurch kann ein Entkalkungsvorgang einerseits nicht zu häufig und andererseits rechtzeitig vor dem Auftreten zu starker Verkalkung initiiert werden.

Die Mittel zum Bestimmen der Wasserhärte des Frischwassers können als ein mit einer Wasserhärteskala versehener Regler ausgeführt sein, wobei ein Bediener die im Leitungsnetz vorherrschende Wasserhärte durch Einstellen des Reglers einstellt. Alternativ kann die Wasserhärte als Parameter über ein Tastenfeld eingegeben und in einer Steuereinheit gespeichert werden.

Im Stand der Technik wird ein erstes Serviceintervall für den ersten Servicevorgang und ein vom ersten verschiedenes zweites Serviceintervall für den zweiten Servicevorgang beachtet und in Abhängigkeit vom Ablauf des ersten bzw. zweiten Serviceintervalls der erste bzw. zweite Servicevorgang initiiert. Demgegenüber kann die Vorrichtung Auswertemittel der ersten erfassten Notwendigkeit eines ersten und der von zweiten Mitteln erfassten Notwendigkeit eines zweiten Servicevorgangs sowie zum Auslösen des Kombinationsservicevorgangs umfassen. Die Auswertemittel werten die Dringlichkeit zum Erfüllen des ersten Servicevorgangs (z.B. Entkalkung) und des zweiten Servicevorgangs (z.B. Reinigung) aus und bestimmen ein einziges Kombinationsservice-Intervall, das dem ersten und dem zweiten Serviceerfordernis gerecht wird. Das Entkalkungserfordernis hängt beispielsweise wesentlich von der Menge des erhitzten Wassers und der Wasserhärte ab, während ein Reinigungserfordernis wesentlich von der Menge der verbrauchten Heißgetränkezutat - also von einer davon unabhängigen Größe - abhängt. Trotzdem kombiniert die Erfindung beide Vorgänge. Die Reduzierung auf ein einziges Kombinationsservice-Intervall hat den Vorteil, dass nicht mehr zwei verschiedene Serviceintervalle überwacht werden müssen, sondern nur noch das eine Kombinationsserviceintervall.

Musste in den bekannten Heißgetränkevorrichtungen für jeden Servicevorgang ein zugehöriges Erfordernis zum Ausführen des Servicevorgangs erfasst und überwacht werden, genügt es, bei einem erfindungsgemäßen Kombinationsservicevorgang die Serviceintervalle einmal im Voraus fest einzustellen. Diese Einstellung kann sich auf eine vorbestimmte Anzahl von Heißgetränkebezügen oder auf eine vorbestimmten Menge Wasserdurchlauf beziehen und in einer weiteren Ausführungsform zusätzlich von der Wasserhärte abhängig gemacht werden.

Beim Ablauf des Kombinationsserviceintervalls können die Auswerte- und Auslösemittel automatisch einen Kombinationsservicevorgang auslösen. Alternativ kann dann die Steuereinheit den normalen Getränkezubereitungsbetrieb der Vorrichtung unterbrechen und den Bediener zur Durchführung des erfindungsgemäßen Kombinationsservicevorgangs auffordern.

Alternativ können die Auswertemittel einem Bediener die Notwendigkeit für ein Kombinationsserviceerfordernis auch unter Verwendung von Signalisierungsmitteln optisch oder akustisch anzeigen. Die Vorrichtung kann ferner ein haptisches Auslösemittel umfassen, das auch mit einem Anzeigemittel zusammenwirken kann, mit dem der Bediener den Kombinationsservicevorgang auslösen kann.

Eine Steuereinheit zum Steuern der Servicevorgänge kann elektrische oder optische Steuerleitungen zur Übertragung von Mess- und/oder Steuersignalen zu entsprechend zu betätigenden Komponenten aufweisen.

Die Aufgabe wird außerdem durch eine Steuereinrichtung zur Durchführung eines Verfahrens zur Durchführung von Wartungs- bzw. Servicevorgängen gelöst, die einen Messwerteeingang zum Empfang von Messwerten bezüglich der Durchflussmenge und/oder der Wasserhärte, der Anzahl der Getränkeabgabevorgänge und/oder der Nutzungshäufigkeit, eine Speichereinrichtung zur Speicherung der Messwerte, eine Parameterermittlungseinheit zur Ermittlung eines Steuerparameters und einen Parameterausgang zur Ausgabe des Steuerparameters an eine Heißgetränkezubereitungsvorrichtung aufweist.

Ein Lösungsmittel der Erfindung stellt daher auch ein Computerprogrammprodukt dar, das direkt in einen Speicher einer programmierbaren Steuerungseinrichtung für eine Heißgetränkezubereitungsvorrichtung ladbar ist und Programmcodemittel umfasst, um das vorher beschriebene Verfahren zur Durchführung von Wartungs- bzw. Servicevorgängen auszuführen, wenn das Programmprodukt in die Steuereinrichtung geladen wird. Dies kann zum Beispiel im Rahmen einer Aktualisierung der Programmierung der Steuereinrichtung (sog. Update) erfolgen, indem das Computerprogrammprodukt in deren Speicher überspielt wird.
Das Prinzip der Erfindung wird im Folgenden anhand einer Zeichnung beispielshalber noch näher erläutert. In den Zeichnungen zeigt:
Figur 1 ein Blockdiagramm eines Kaffeevollautomaten;
Figur 2A ein Zeitablaufdiagramm für einen Entkalkungszyklus nach dem Stand der Technik; und
Figur 2B ein Zeitablaufdiagramm für einen Reinigungszyklus nach dem Stand der Technik.
Figur 3 ein Zeitablaufdiagramm eines Kombinationsservicevorgangs gemäß einer ersten Ausführungsform der Erfindung;
Figur 4 ein derartiges Diagramm gemäß einer zweiten Ausführungsform der Erfindung;

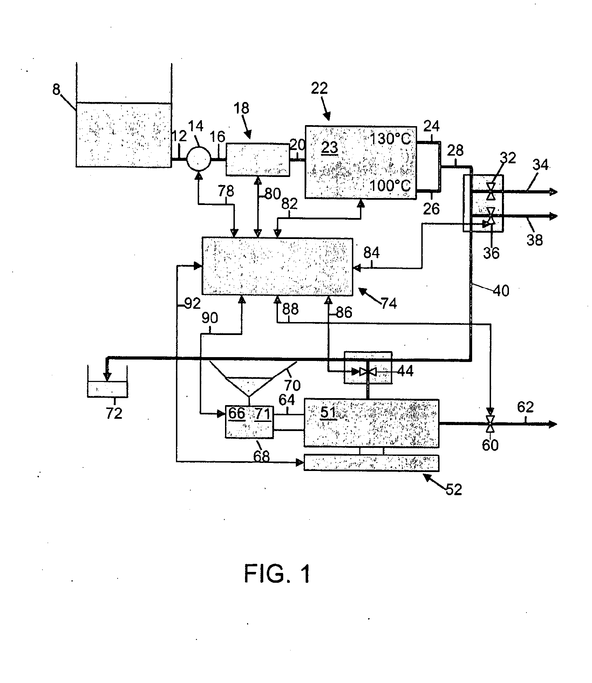

Ein Kaffeevollautomat gemäß Fig. 1 als Beispiel einer Heißgetränkebereitungsvorrichtung umfasst einen Wassertank 8 zur Aufnahme eines Wasservorrats, einen Durchflussmesser 14, eine Vorratsauslaufleitung 12, die den Wassertank 8 mit dem Durchflussmesser 14 verbindet, eine Pumpe 18, eine Pumpenansaugleitung 16, die den Durchflussmesser 14 mit der Pumpe verbindet, und eine steuerbare Heizkammer 23 zum Erhitzen von Wasser und Bereiten von Heißwasser und Dampf. Der Vollautomat umfasst weiter eine Pumpenausgangsleitung 20, die die Pumpe 18 mit der Heizkammer 23 verbindet, und eine Heißwasserleitung 28, die den Dampfausgang 24 und den Heißwasserausgang 26 der Heizkammer 23 zusammenfasst und zu einem steuerbaren Dampfabgabeventil 32 einer Dampfabgabeleitung 34 und zu einem steuerbaren Heißwasserabgabeventil 36 einer Heißwasserabgabeleitung 38 führt.

Im normalen Betrieb saugt die Pumpe Wasser aus dem Wassertank 8 durch die Vorratsauslaufleitung 12, den Durchflussmesser 14 und die Pumpenansaugleitung 16 an und fördert das Wasser durch die Pumpenausgangsleitung 20 weiter in die Heizkammer 23. In der Heizkammer 23 wird das Wasser auf Kochtemperatur (100 °C) erhitzt und/oder teilweise verdampft, indem es auf eine Dampftemperatur, z.B. 130 °C, gebracht wird. Durch die Ventile 36 und 32 kann der Heizkammer 23 Wasserdampf entnommen und beispielsweise zum Aufschäumen von Milch beim Zubereiten von Cappuccino verwendet werden.

Der Kaffeevollautomat umfasst ferner eine Brühkammer 51 zum Mischen von heißem Wasser mit Kaffeepulver als Heißgetränkezutat, Brüheinlassmittel 42 mit einem Brüheinlassventil 44, eine Tropfschale 72 zum Auffangen von nicht benutztem, heißem Wasser, eine Heißwasserleitung 40 in Verlängerung der Heißwasserleitung 28 vom Heißwasserausgang 26 über das Brüheinlassventil 44 zur Tropfschale 72, einen Zutatenvorratsbehälter 68 für Kaffeepulver, einen Trichter 70 und eine Zutatenzufuhrleitung 64 vom Vorratsbehälter 68 zur Brühkammer 51.

Der Kaffeevollautomat umfasst ferner ein in der Brühkammer 51 verschiebbar angeordnetes Kolbenelement (nicht gezeigt) zum Komprimieren des Kaffeepulvers, einen steuerbaren Antriebsmotor 52,für das Kolbenelement, eine Kaffeeabgabeleitung 62 und ein steuerbares Kaffeeauslassventil 60.

Zum Steuern von Abläufen und Vorgängen in dem Kaffeevollautomaten umfasst dieser ferner eine Steuereinheit 74 zum Steuern von Ventilen und Komponenten des Kaffeevollautomaten sowie Steuerleitungen zum Verbinden der Steuereinheit 74 mit den gesteuerten Ventilen und Komponenten. Die Steuerleitungen umfassen eine Durchflussmesssteuerleitung 78 vom Durchflussmesser 14, eine Pumpensteuerleitung 80 von der Pumpe 18, eine Heizgerätsteuerleitung 82 für die Heizkammer 23, eine Heißwasserentnahmesteuerleitung 84 für das Heißwasserabgabeventil 36, eine Brüheinlasssteuerleitung 86 für das Brüheinlassventil 44, eine Kaffeeabgabesteuerleitung 88 für das Kaffeeauslassventil 60, eine Zutatenzufuhrsteuerleitung 90 und eine Antriebssteuerleitung 92 zum Antriebsmotor 52. Die Ventile 32, 36, 44 und 60 sind so ausgeführt, dass sie auch von einem Bediener betätigt werden können.

Die Durchflussmesssteuerleitung 78 verbindet den Durchflussmesser 14 mit der Steuereinheit 74 und führt ihr im Betrieb ein Messsignal zu, aus dem die durch den Durchflussmesser 14 strömende Wassermenge ermittelbar ist. So sind die verschiedenen Zeitpunkte und Mengen zu steuern und die Stellung der Ventile auszulesen. Über den Antriebsmotor 52 kann die Steuereinheit 74 den Zeitpunkt und die Betätigungsdauer des Antriebsmotors 52 und damit das Komprimieren des Volumens der Brühkammer 51, das Abgeben des zubereiteten Heißgetränks oder das Ausstoßen von Resten der Heißgetränkezutat, wie Kaffeetrester, aus der Brühkammer 51 steuern.

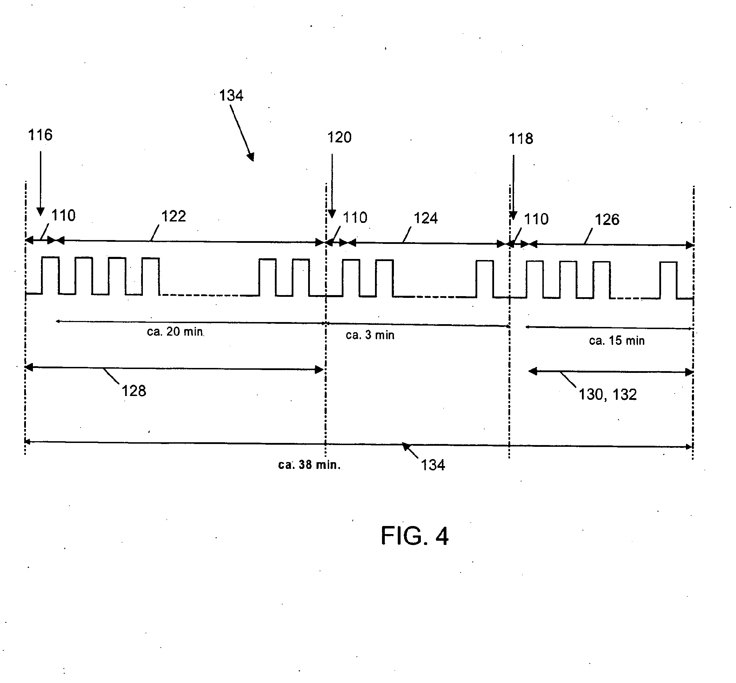

Im Betrieb wird es nach Durchfluss einer bestimmten Menge von Frischwasser in Abhängigkeit von dessen Wasserhärte erforderlich, die mit dem heißen Wasser in Berührung kommenden, innenseitigen Oberflächen der Komponenten der Vorrichtung zu entkalken. Auch ist es nach einer bestimmten Menge des verarbeiteten Kaffeepulvers, abhängig von dessen Gehalt an ätherischen Ölen, notwendig, die mit dem Kaffee in Berührung kommenden innenseitigen Oberflächen von Verklebungen zu reinigen. Für Kaffeevollautomaten ist im Stand der Technik bekannt, je einen auf das Entkalken gerichteten Entkalkungsvorgang und einen auf das Reinigen von Verklebungen gerichteten Reinigungsvorgang unabhängig voneinander beim Auftreten des Entkalkungs- und des Reinigungserfordernisses bzw. nach Ablauf der jeweiligen Betriebsdauer auszuführen. Hierzu zeigen Fig. 4A einen Entkalkungsvorgang und Fig. 4B einen Reinigungsvorgang aus dem Stand der Technik.

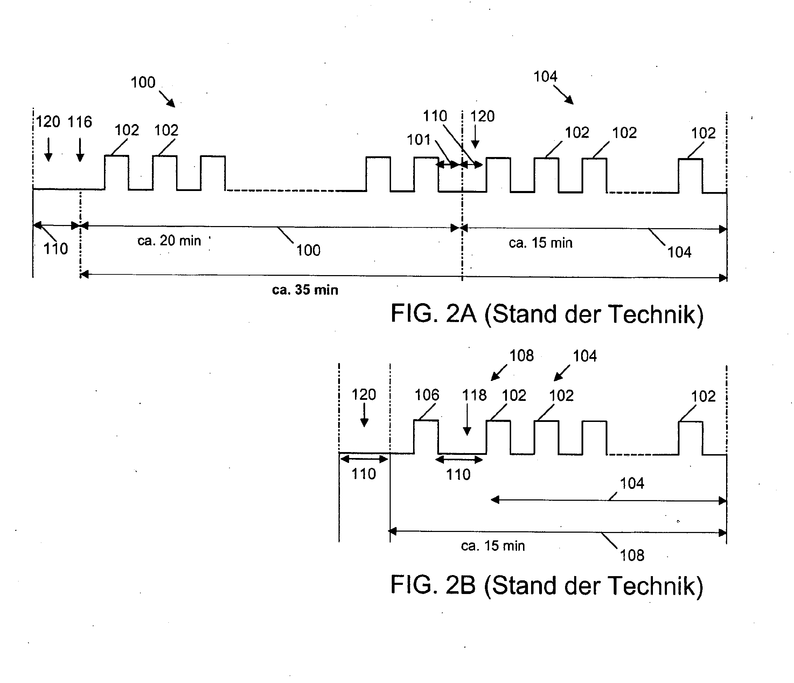

Fig. 2A zeigt einen Entkalkungsvorgang gemäß dem Stand der Technik. Er umfasst einen Entkalkungszyklus 100 und einen anschließenden Spülzyklus 104, die von einem Bediener ausgelöst werden. Er beginnt mit einer von einer Ablaufsteuerung initiierten Wartezyklus 110, bei dem der Bediener das Frischwasser in den Wassertank nachfüllt (Bedienerschritt 120) und Entkalkerflüssigkeit in einer vorbestimmten Dosiermenge in den Wassertank einfüllt (Bedienerschritt 116). Im Anschluss an die Bedienerschritte 116 und 120 steuert die Ablaufsteuerung die Pumpe 18 durch Aufgeben einer vorbestimmten Anzahl von Pumpentakten 102 so an, dass eine vorbestimmte Menge der Entkalkerlösung aus dem Wassertank 10 entlang des Weges des Frischwassers aus dem Wassertank 10 durch die Pumpe 18 in die Heizkammer 23 und weiter durch die Heißwasser leitenden Leitungen gefördert wird. In jedem Pumpentakt 102 fördert die Pumpe 18 eine vorbestimmte Menge von 25 ml Flüssigkeit (Entkalkerlösung). Zum Befüllen der zu entkalkenden Volumina, nämlich der Heizkammer und der heißes Wasser führenden Leitungen, wird eine vorbestimmte Menge von ca. 500 ml Entkalkerlösung benötigt, was mit einer Anzahl von 20 von Pumpenzyklen 102 erreicht wird. Nach dem letzten Pumpentakt 102 wartet die Ablaufsteuerung eine vorbestimmte Einwirkzeit 101. Nach der Einwirkzeit 101 beginnt der Spülzyklus 104 mit einem weiteren Wartezyklus 110, in dem das Nachfüllen von Frischwasser in den Wassertank (Bedienerschritt 120) abgewartet wird. Nach Ausführung des Bedienerschritts 120 steuert die Ablaufsteuerung die Pumpe 18 zum Ausspülen der Entkalkerlösung aus den damit befüllten Volumina an, wozu ca. 500 ml Frischwasser entsprechend 20 Pumpentakten benötigt werden. Der bekannte Entkalkungsvorgang dauert, gerechnet ab dem Ende des Wartezyklus 110 zu Beginn des Entkalkungszyklus 100, insgesamt etwa 35 Minuten. Davon entfallen etwa 20 Minuten auf den Entkalkungszyklus 100 einschließlich der Einwirkzeit 101 (etwa 5 Minuten) und etwa 15 Minuten auf den Spülzyklus, gerechnet ab dem Ende des Bedienerschritts 120.

Fig. 2B zeigt einen Reinigungsvorgang gemäß dem Stand der Technik. Er umfasst einen Reinigungszyklus 108 und einen Spülzyklus 104. Er wird ebenfalls von einem Bediener ausgelöst und beginnt mit einem ersten Wartezyklus 110, in dem der Bediener Frischwasser in den Wassertank nachfüllt (Bedienerschritt 120). Danach gibt die Ablaufsteuerung eine vorbestimmte Anzahl von Pumpentakten 106 an die Pumpe 18 ab, um die Brühkammer 51 mit frischem Wasser zu spülen und zu befüllen. Dann folgt ein zweiter Wartezyklus 110, in dem der Bediener eine Reinigungstablette in die Brühkammer einlegt (Bedienerschritt 118). Nach einer Wartezeit, in der die Reinigungstablette sich im Wasser auflöst und das Reinigungsmittel auf die Verunreinigungen einwirkt, steuert die Ablaufsteuerung die Pumpe 18 an, um die mit Reinigungsflüssigkeit gefüllte Brühkammer 51 zu spülen. Dazu sind ca. 350 ml Frischwasser, entsprechend etwa 14 Pumpenzyklen 106, erforderlich.

Kaffeevollautomaten nach dem Stand der Technik weisen mindestens je eine Ablaufsteuerung für einen Entkalkungsvorgang und eine Ablaufsteuerung für einen Reinigungsvorgang und gegebenenfalls für weitere Spülvorgänge auf.

Die Betriebsdauer, die bis zum Auftreten der Notwendigkeit zum Entkalken verstrichen ist, ist allgemein verschieden von derjenigen, die bis zum Auftreten der Notwendigkeit zum Reinigen vergangen ist. Bisher wurden daher die beiden Serviceintervalle des Kaffeevollautomaten (Reinigen und Entkalken) unabhängig voneinander erfasst und überwacht und der entsprechende Servicevorgang initiiert. Durch das erfindungsgemäße Zusammenfassen eines Entkalkungs- und eines Reinigungsservicevorgangs in einem Kombinationsservicevorgang ist es nur noch erforderlich, ein Serviceintervall zu erfassen und den Kombinationsservicevorgang durchzuführen, um beiden Serviceerfordernissen gerecht zu werden. Die vorliegende Erfindung vereinfacht also die Vielfalt der verschiedenen Ablaufsteuerungen bzw. die Programmierung der Steuereinheit dadurch, dass nur ein Kombinationsservicevorgang bereitgestellt wird, der einen Entkalkungsvorgang und einen Reinigungsvorgang zusammengefasst und halbautomatisch ausführt.

Im Beispiel ist die Brühkammer 51 nicht beständig gegenüber der Entkalkerlösung. Daher wird das Brüheinlassventil 44 zu Beginn des Wartezyklus 110 vor dem Einfüllen der Entkalkerlösung geschlossen. Infolgedessen muss die Entkalkerlösung nach dem Einwirken erst vollständig aus den damit befüllten Leitungen und Komponenten ausgespült werden, bevor das Brüheinlassventil 44 wieder geöffnet und die Brühkammer. 51 gegebenenfalls mit frischem Wasser befüllt, vorgespült oder ausgespült werden kann. Es ist dann nicht möglich, die Kaffeeabgabeleitung 62 zu entkalken; auch können nicht gleichzeitig die Entkalkerlösung aus den damit befüllten Volumina und die Reinigungsflüssigkeit aus der Brühkammer ausgespült werden.

Fig. 2 zeigt einen Kombinationsservicevorgang 112 nach einer ersten Ausführungsform der Erfindung in Bezug auf Fig. 1, der den Entkalkungsvorgang und den Reinigungsvorgang stofflich und zeitlich wie folgt zusammenfasst. Der Kombinationsservicevorgang 112 beginnt mit einem Wartezyklus, in dem das Nachfüllen von Frischwasser in den Wassertank 8 (Bedienerschritt 120) abgewartet wird. Dann steuert die Steuereinheit 74 die Pumpe 18 mit einer geeignet gewählten Pumpentaktung (Phase 114) so, dass die Brühkammer 51 mit Frischwasser gespült und befüllt wird. Die Dauer der Pumpentaktung 114 bzw. die Anzahl der Pumpentakte 106 ist so gewählt, dass alle Wasser führenden Leitungen auf dem Weg des Wassers zwischen dem Wassertank 8 und der Brühkammer 51 mit frischem Wasser befüllt und gespült werden. Nach der Phase 114 folgt ein erster Wartezyklus 110, in dem das Einfüllen von Entkalkerlösung in den Wassertank 8 (Bedienerschritt 116) und das Eingeben einer Reinigungstablette in die Brühkammer 51 (Bedienerschritt 118) abgewartet werden. Der Bediener bestätigt die Ausführung der Bedienerschritte 116 und 118 durch Betätigen eines Bestätigungsmittels (nicht gezeigt). Anschließend an die Bedienerschritte 116 und 118 wird in Phase 122 die Pumpe 18 angesteuert, um die im Betrieb des Kaffeevollautomaten mit Wasser in Berührung kommenden Leitungen und Komponenten mit Entkalkerlösung zu befüllen. Auf die Phase 122 folgt ein weiterer Wartezyklus 110, in dem das Nachfüllen von Frischwasser (Bedienerschritt 120) abgewartet wird. Der Bediener bestätigt auch die Ausführung des Bedienerschritts 120 durch Betätigen des Bestätigungsmittels. Auf den Bedienerschritt 120 folgt eine Phase 124, in der von der Pumpe 18 eine Wassermenge gefördert wird, um die zuvor befüllte Entkalkerlösung auf dem Weg vom Wassertank 8 durch die Heizkammer 23 und die Heißwasserleitung 28 bis zumindest vorbei an der Abzweigung der Brüheinlassleitung 46 von der Heißwasserzufuhrleitung 40 auszuspülen und mit Frischwasser zu füllen.

Während der Phase 122 und der Phase 124 hatte das in die Brühkammer 51 eingegebene Reinigungsmittel Zeit, sich mit dem darin befindlichen Wasser zu vermischen und die Verklebungen der öligen Rückstände des Kaffeepulvers in der Brühkammer und den sich daran anschließenden Leitungen zu lösen. Am Ende der Phase 124 steht Frischwasser an der Abzweigung der Brüheinlassleitung 46 von der Heißwasserzufuhrleitung 40 an. Dann steuert die Steuereinheit über die Brüheinlasssteuerungsleitung 86 das Öffnen des Brüheinlassventils 44. Daraufhin wird in einer Phase 126 das Reinigungsmittel aus der Brühkammer 51 und der Kaffeeabgabeleitung 62 ausgespült. Mit Beendigung der Phase 126 ist auch der Spülzyklus 132 beendet.

Im Spülzyklus 132 werden gleichzeitig die Entkalkerlösung aus den zu entkalkenden Bereichen und die Reinigungsmittellösung aus den von Verklebungen zu reinigenden Bereichen ausgespült. Die Zusammenfassung der Zyklen zum Ausspülen des Entkalkers und zum Ausspülen des Reinigungsmittels spart Zeit gegenüber einer getrennten Ausführung von zwei entsprechenden Spülzyklen.

Wenn die Brühkammer 51 aus einem Material hergestellt und insgesamt so ausgeführt ist, dass sie gegenüber der Einwirkung des Entkalkungsmittels beständig ist, kann die Ablaufsteuerung weiter vereinfacht und zusätzlich Zeit eingespart werden. Dann ist es nicht notwendig, in der Phase des Befüllens mit Entkalkerlösung (Phase 122) das Brüheinlassventil 44 geschlossen zu halten. Nach der Einwirkzeit des Reinigungsmittels in der Brühkammer (Phase 122) kann das Brüheinlassventil 44 zu Beginn des Ausspülzyklus (Phase 124) geöffnet werden, so dass anschließend die mit Entkalkerlösung gefüllten Bereiche und die mit Reinigungslösung gefüllten Bereiche des Kaffeevollautomaten gleichzeitig ausgespült werden. So werden die Phasen 124 und 126 zeitlich in einer Spülphase zusammengefasst. Die zusammengefasst Spülphase kann dann auch kürzer sein als die Nacheinanderausführung der Phasen 124 und 126.

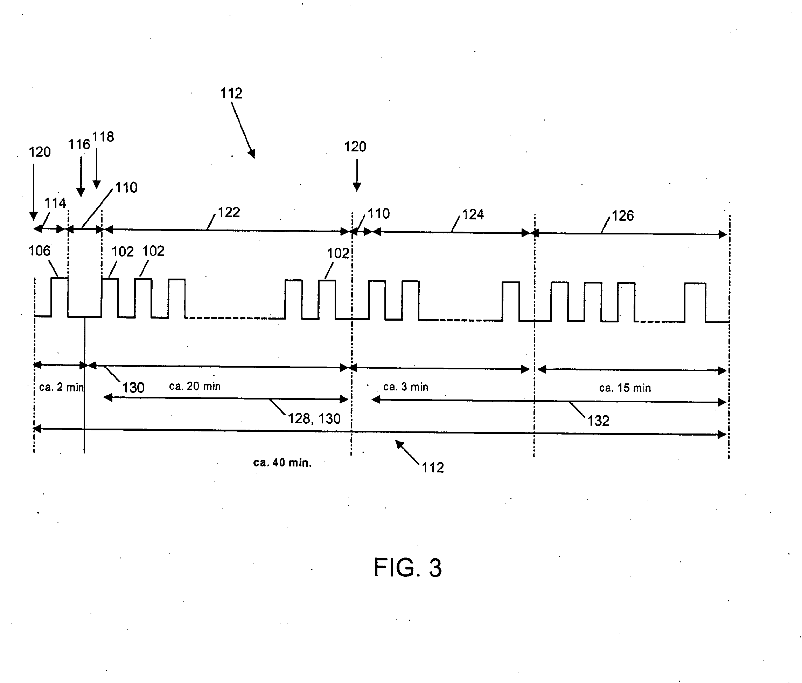

Fig. 3 zeigt eine zweite Ausführungsform eines Kombinationsservicevorgangs 134 nach der Erfindung. Ein grundsätzlicher Unterschied zu dem in Fig. 2 gezeigten Kombinationsservicevorgang liegt darin, dass das Einlegen der Reinigungstablette (Bedienerschritt 118) und das Befüllen mit Entkalker (Bedienerschritt 116) nicht in einem gemeinsamen Wartezyklus ausgeführt werden, sondern dass die Reinigungstablette später - nach den Vorgängen zum Entkalken - in die Brühkammer 51 eingelegt wird. Jedoch laufen die Vorgänge zum Entkalken und die Vorgänge zum Reinigen zwingend nacheinander ab. Der Kombinationsservicevorgang 134 beginnt mit einem Wartezyklus 110, in dem das Einfüllen von Entkalkerlösung in den Wassertank 8 (Bedienerschritt 116) abgewartet wird. Der Bediener bestätigt die Ausführung (Bedienerschritt 116) durch Betätigen eines Bestätigungsmittels (nicht gezeigt). Daraufhin folgt eine Phase 122, in der die Pumpe 18 angesteuert wird, um die zu entkalkenden Bereiche mit Entkalkerlösung zu befüllen. Dabei wird das Brüheinlassventil 44 geschlossen gehalten, da die Brühkammer 51 gegenüber dem Entkalkungsmittel nicht-resistent ist. Auf die Phase 122 folgt ein weiterer Wartezyklus 110, in dem das Nachfüllen von Frischwasser in den Wassertank 8 (Bedienerschritt 120) abgewartet wird. Wiederum bestätigt der Bediener in der vorgenannten Weise die Ausführung des Bedienerschritts 120. In der anschließenden Phase 124 wird die Entkalkerlösung aus den entkalkten Bereichen bzw. Volumina mittels Frischwasser ausgespült, ähnlich wie in der Phase 124 des bezüglich Fig. 2 oben beschriebenen Kombinationsservicevorgangs 112. Auf die Phase 124 folgt ein dritter Wartezyklus 110, in dem das Eingeben des Reinigungsmittels in Form einer Reinigungstablette in die Brühkammer 51 (Bedienerschritt 118) abgewartet wird. Danach bestätigt der Bediener auch die Ausführung des Bedienerschritts 120 durch Betätigen des Bestätigungsmittels. Zu Beginn der sich anschließenden Phase 126 wird das Reinigungsmittel aus der Brühkammer 51 und der sich anschließenden Kaffeeabgabeleitung 62 ausgespült. Dabei wird das Brüheinlassventil 44, von der Steuereinheit 74 über die Brüheinlasssteuerleitung 86 gesteuert, geöffnet. Anschließend wird das Reinigungsmittel aus der Brühkammer 51 und der Kaffeeabgabeleitung 62 ausgespült.

Den oben beschriebenen Kombinationsservicevorgängen 112 gemäß Fig. 2 und 134 gemäß Fig. 3 ist gemeinsam, dass das Befüllen der zu entkalkenden Volumina mit Entkalkerlösung so lange dauert, bis der mit Entkalkerlösung gefüllte Wassertank 8 vollständig entleert ist. Danach muss Frischwasser in den Wassertank 8 gefüllt werden (Bedienerschritt 120), um das Entkalkungsmittel vollständig und gründlich auszuspülen.

Durch Zusammenfassen eines Entkalkungsvorgangs und eines Reinigungsvorgangs in einem Kombinationsservicevorgang, wie bezüglich der Figuren 2 und 3 beschrieben, werden in Bezug auf den Stand der Technik aus den Figuren 4A und 4B folgende Vorteile erzielt: Die Bedienung wird vereinfacht, denn es gibt nicht mehr verschiedene Servicevorgänge, bei denen verschiedene Bedienerschritte auszuführen sind, sondern nur noch einen Kombinationsservicevorgang, der die anfallenden Serviceerfordernisse in einem Vorgang zusammengefasst ausführt und bei dem die Abfolge der auszuführenden Bedienerschritte stets gleich ist. Daher ist anstelle der bisher benötigten mindestens zwei verschiedenen Ablaufsteuerungen für die zwei verschiedenen Servicevorgänge nur eine Ablaufsteuerung erforderlich. So wird die Implementierung der Ablaufsteuerung vereinfacht und der Bediener kann keinen Vorgang vergessen.

### Bezugszeichenliste

- 8: Wassertank
- 12: Vorratsauslaufleitung
- 14: Durchflussmesser
- 16: Pumpenansaugleitung
- 18: Pumpe
- 20: Pumpenausgangsleitung
- 23: Heizkammer
- 24: Dampfausgang
- 26: Heißwasserausgang
- 28: Heißwasserleitung
- 32: Dampfabgabeventil
- 34: Dampfabgabeleitung
- 36: Heißwasserabgabeventil
- 38: Heißwasserabgabeleitung
- 40: Heißwasserzufuhrleitung
- 44: Brüheinlassventil
- 51: Brühkammer
- 52: Antriebsmotor
- 60: Kaffeeauslassventil
- 62: Kaffeeabgabeleitung
- 64: Zutatenzufuhrleitung
- 66: Kaffeevorrat
- 68: Kaffeevorratsbehälter
- 70: Einfüllmittel, Trichter
- 72: Tropfschale
- 74: Steuereinheit
- 78: Durchflussmesssteuerleitung
- 80: Pumpensteuerleitung
- 82: Heizgerätsteuerleitung
- 84: Heißwasserentnahmesteuerleitung
- 86: Brüheinlasssteuerleitung
- 88: Kaffeeabgabesteuerleitung
- 90: Zutatenzufuhrsteuerleitung
- 92: Antriebssteuerleitung

- 100: Entkalkungszyklus (Stand der Technik)
- 101: Einwirkzeit
- 102: kurzer Pumpentakt (z.B. während eines Entkalkungszyklus)
- 104: Spülzyklus (Stand der Technik)
- 106: langer Pumpentakt (z.B. zum Spülen bzw. Befüllen der Brühkammer)
- 108: Reinigungszyklus (Stand der Technik)
- 110: Wartezyklus (Warten auf Bedienerschritt)
- 112: Kombinationsservicevorgang nach der Erfindung (erste Ausführungsform)
- 114: Pumpentaktung zum Spülen der Brühkammer (im Kombinationszyklus nach der Erfindung)
- 116: Bedienerschritt: Entkalker einfüllen
- 118: Bedienerschritt: Reinigungstablette eingeben
- 120: Bedienerschritt: Frischwasser nachfüllen
- 122: Einbringen bzw. Spülen mit Entkalkerlösung
- 124: Ausspülen der Entkalkerlösung
- 126: Ausspülen des Reinigungsmittels
- 128: Entkalkungszyklus
- 130: Reinigungszyklus
- 132: Spülzyklus
- 134: Kombinationsservicevorgang nach der Erfindung (zweite Ausführungsform)

## Patentansprüche

1. Ein Verfahren zur Durchführung von Wartungs- bzw. Servicevorgängen in einer Vorrichtung zur Bereitung von Heißgetränken, insbesondere in einem Kaffeevollautomaten, wobei die Vorrichtung einen Wassertank (8), eine Heizkammer (23) zum Aufheizen von Wasser, mindestens eine Brühkammer (51) zum Bereiten von mindestens einer Heißgetränke-Art durch Zugabe mindestens einer Heißgetränkezutat (71) und einen Heißgetränkeauslass (62) umfasst und wobei im Betrieb der Vorrichtung ein erstes und ein zweites Serviceerfordernis auftreten, **gekennzeichnet durch** die Ausführung mindestens eines Kombinationsservicevorgangs (112, 134), in dem ein Entkalkungszyklus (128) und ein Reinigungszyklus (130) oder ein erster Reinigungszyklus und ein zweiter Reinigungszyklus zumindest teilweise stofflich und/oder zeitlich zusammengefasst sind, so dass nur ein gemeinsamer Spülzyklus (132) erforderlich ist.

2. Verfahren nach Anspruch 1, wobei ungeachtet der Ausführungsreihenfolge das eine Serviceerfordernis ein Entkalken und das andere Serviceerfordernis das Reinigen einer ersten Stoffgruppe betrifft oder das eine und das andere Serviceerfordernis das Reinigen einer ersten bzw. einer zweiten Stoffgruppe betrifft.

3. Verfahren nach Anspruch 1 oder 2, wobei der Kombinationsservicevorgang (112, 134) einen Entkalkungszyklus (128) und einen Spülzyklus (132) umfasst und wobei zwischen den beiden Zyklen (128, 132) ein Einwirken des Entkalkungsmittels stattfindet.

4. Verfahren nach einem der Ansprüche 1 bis 3, wobei der Kombinationsservicevorgang (112, 134) einen Reinigungszyklus (130) und einen Spülzyklus (132) umfasst und wobei zwischen den beiden Zyklen (130, 132) ein Einwirken des Reinigungsmittels stattfindet.

5. Verfahren nach einem der Ansprüche 1 bis 4, wobei ein Beschicken mit einem Entkalkungsmittel (116) und/oder mit einem Reinigungsmittel (118) während eines Wartezyklus (110) ausgeführt wird.

6. Verfahren nach einem der vorhergehenden Ansprüche, wobei ein Serviceerfordernis erfasst wird.

7. Verfahren nach Anspruch 6, **dadurch gekennzeichnet, dass** zum Erfassen eines Entkalkungserfordernisses die Durchflussmenge über mehrere Heißgetränke-Abgabevorgänge hinweg gemessen und die Wasserhärte bestimmt wird.

8. Verfahren nach einem der vorhergehenden Ansprüche, **dadurch gekennzeichnet, dass** zum Erfassen eines Reinigungserfordernisses die Anzahl von Heißgetränkeabgaben gezählt und/oder die Nutzungshäufigkeit der Vorrichtung bestimmt wird.

9. Verfahren nach einem der vorhergehenden Ansprüche mit automatischem Auslösen des Kombinationsservicevorgangs (112, 134).

10. Computerprogrammprodukt, das direkt in einen Speicher einer programmierbaren Steuerungseinrichtung einer Heißgetränkezubereitungseinrichtung ladbar ist, mit Programmcodemitteln, um ein Verfahren nach einem der Ansprüche 1 bis 9 auszuführen, wenn das Programmprodukt in die Steuereinrichtung geladen wird.

## Claims

1. A method of carrying out maintenance or servicing operations in a device for preparation of hot drinks, particularly in a fully automated coffee machine, wherein the device comprises a water tank (8), a heating chamber (23) for heating water, at least one brewing chamber (51) for preparing at least one kind of hot drink by addition of at least one hot drink ingredient (71) and a hot drink outlet (62) and wherein a first and a second servicing requirement arise in operation of the device, **characterised by** performance of at least one combination servicing procedure (112, 134) in which a decalcifying cycle (128) and a cleaning cycle (130) or a first cleaning cycle and a second cleaning cycle are combined at least partly in terms of material and/or time so that only a common rinsing cycle (132) is required.

2. Method according to claim 1, wherein despite the sequence of performance one service requirement concerns decalcification and the other service requirement concerns cleaning of a first material group or the one and other service requirement concern the cleaning of a first and a second material group, respectively.

3. Method according to claim 1 or 2, wherein the combination servicing procedure (112, 134) comprise a decalcification cycle (128) and a rinsing cycle (132) and wherein action of the decalcifying agent takes place between the two cycles (128, 132).

4. Method according to any one of claims 1 to 3, wherein the combination servicing procedure (112, 134) comprises a cleaning cycle (130) and a rinsing cycle (132) and wherein action of the cleaning agent takes place between the two cycles (130, 132).

5. Method according to any one of claims 1 to 4, wherein charging with a decalcifying agent (116) and/or with a cleaning agent (118) is carried out during a maintenance cycle (110).

6. Method according to any one of the preceding claims, wherein a servicing requirement is detected.

7. Method according to claim 6, **characterised in that** for detection of a decalcification requirement the throughflow quantity is measured over several hot drink delivery processes and the water hardness is determined.

8. Method according to any one of the preceding claims, **characterised in that** for detection of a cleaning requirement the number of hot drink deliveries is countered and/or the frequency of use of the device is determined.

9. Method according to any one of the preceding claims with automatic triggering of the combination service procedure (112, 134).

10. Computer program product which can be loaded directly into a memory of a programmable control device of hot drinks preparation equipment, with program code means in order to execute a method according to any one of claims 1 to 9 when the program product is loaded into the control device.

## Revendications

1. Procédé pour réaliser des opérations de maintenance et de service dans un dispositif pour la préparation de boissons chaudes, en particulier dans un distributeur automatique de café, le dispositif comprenant un réservoir d'eau (8), une chambre de chauffage (23) pour le réchauffement de l'eau, au moins une chambre de préparation (51) pour la préparation d'au moins un type de boisson chaude par l'ajout d'au moins un ingrédient de boisson chaude (71) et une sortie de boisson chaude (62) et une première et une seconde exigences de service apparaissant pendant le fonctionnement du dispositif, **caractérisé par** l'exécution d'au moins une opération de service mixte (112, 134), dans lequel un cycle de détartrage (128) et un cycle de nettoyage (130) ou un premier cycle de nettoyage et un second cycle de nettoyage sont regroupés au moins en partie au niveau de la matière et/ou au niveau du temps, de sorte qu'uniquement un seul cycle de lavage (132) commun est requis.

2. Procédé selon la revendication 1, dans lequel nonobstant l'ordre d'exécution une exigence de service concerne un détartrage et l'autre exigence de service le nettoyage d'un premier groupe de produits ou l'une et l'autre exigences de service concerne le nettoyage d'un premier resp. d'un second groupe de produits.

3. Procédé selon la revendication 1 ou 2, l'opération de service mixte (112, 134) comprenant un cycle de détartrage (128) et un cycle de lavage (132) et un effet de l'agent de détartrage ayant lieu au moins entre les deux cycles (128, 132).

4. Procédé selon l'une quelconque des revendications 1 à 3, l'opération de service mixte (112, 134) comprenant un cycle de nettoyage (130) et un cycle de lavage (132) et un effet de l'agent de nettoyage ayant lieu entre les deux cycles (130, 132).

5. Procédé selon l'une quelconque des revendications 1 à 4, une alimentation avec un agent de détartrage (116) et/ou avec un produit de nettoyage (118) étant exécutée pendant un cycle de maintenance (110).

6. Procédé selon l'une quelconque des revendications précédentes, une exigence de service étant prise en compte.

7. Procédé selon la revendication 6, **caractérisé en ce que**, pour la prise en compte d'une exigence de détartrage, le débit est mesuré sur plusieurs opérations de distribution de boissons chaudes et la dureté de l'eau est déterminée.

8. Procédé selon l'une quelconque des revendications précédentes, **caractérisé en ce que**, pour la prise en compte d'une exigence de nettoyage, le nombre de distributions de boissons chaudes est compté et/ou la fréquence d'utilisation du dispositif est déterminée.

9. Procédé selon l'une quelconque des revendications précédentes avec déclenchement automatique de l'opération de service mixte (112, 134).

10. Produit de programme informatique, qui peut être chargé directement dans une mémoire d'un dispositif de commande programmable d'un dispositif de préparation de boissons chaudes, comprenant des moyens de code de programme pour mettre en oeuvre un procédé selon l'une quelconque des revendications 1 à 9 lorsque le produit de programme est chargé dans le dispositif de commande.
